# EUROPEAN PATENT APPLICATION

(11) **EP 4 567 312 A1**
(43) Date of publication of application: **11.06.2025**
(21) Application number: 23866974.1
(22) Date of filing: 02.06.2023
(51) Int. Cl.: F16K 24/06, F16K 31/06, F16K 31/08, F16K 31/524, F16K 31/60, G01M 3/26, H01M 10/42, H01M 50/30

(54) **EXPLOSION-PROOF VALVE PLUGGING APPARATUS**

(30) Priority: 22.09.2022 CN 202211154447
(71) Applicant: Jiangsu Contemporary Amperex Technology Limited, Changzhou, Jiangsu 213300 (CN); Contemporary Amperex Technology Co., Limited, Ningde, Fujian 352100 (CN)
(72) Inventor: ZHANG, Ning, Changzhou, Jiangsu 213300 (CN); LIAN, Dengwei, Changzhou, Jiangsu 213300 (CN)
(74) Representative: Thoma, Michael
(86) International application number: PCT/CN2023/098134
(87) International publication number: WO 2024/060678

(57) **Abstract**

The present application provides an explosion-proof valve plugging device, and relates to the technical field of battery pack testing equipment. The explosion-proof valve plugging device comprises a sealing cover, a magnetic member and a first driving member. The sealing cover is configured to cover an end of an explosion-proof valve that is provided with a valve cover. The magnetic member is arranged in the sealing cover, and the magnetic member is configured to attract the valve cover. The first driving member is in transmission connection with the magnetic member, and is configured to drive the magnetic member to move relative to the sealing cover, such that the magnetic member comes into contact with the valve cover and drives the valve cover to be opened. After the explosion-proof valve plugging device plugs the explosion-proof valve, the first driving member first drives the magnetic member to come into contact with and attract the valve cover, and then drives the magnetic member to drive the valve cover to be opened. As a result, the magnetic member has a certain travel, so that a height to which the valve cover is pulled up is enough, reducing the risk of low efficiency of inflation of a battery pack by means of the explosion-proof valve plugging device due to a small inflation flow rate.

## Description

### Cross-Reference to Related Application

The present application claims the priority to Chinese patent application no. 202211154447.5, filed on September 22, 2022 and entitled "EXPLOSION-PROOF VALVE PLUGGING DEVICE", which is incorporated herein by reference in its entirety.

### Technical Field

The present application relates to the technical field of battery pack testing equipment, and in particular, to an explosion-proof valve plugging device.

### Background Art

One of the cores of new energy electric vehicles is a battery pack, which is a main power source of new energy electric vehicles, and its performance is one of the factors affecting quality of new energy electric vehicles. After the battery pack is assembled, it is necessary to test air tightness of the battery pack.

During the air tightness test, it is necessary to plug an explosion-proof valve of the battery pack and inflate the battery pack by means of the explosion-proof valve plugging device. How to improve the efficiency of inflation of the battery pack is an urgent technical problem to be solved during the air tightness test of the battery pack.

### Summary of the Invention

In view of the above problems, the present application provides an explosion-proof valve plugging device, which can improve the stability and efficiency of inflation of a battery pack.

The present application provides an explosion-proof valve plugging device, which comprises a sealing cover, a magnetic member and a first driving member, wherein the sealing cover is configured to cover an end of an explosion-proof valve that is provided with a valve cover. The magnetic member is arranged in the sealing cover, and the magnetic member is configured to attract the valve cover. The first driving member is in transmission connection with the magnetic member, and is configured to drive the magnetic member to move relative to the sealing cover, such that the magnetic member comes into contact with the valve cover and drives the valve cover to be opened.

In the technical solution of the embodiment of the present application, after the explosion-proof valve plugging device plugs the explosion-proof valve, the first driving member first drives the magnetic member to come into contact with and attract the valve cover, and then drives the magnetic member to drive the valve cover to be opened. As a result, the magnetic member has a certain travel, so that a height to which the valve cover is pulled up is enough, reducing the risk of low efficiency of inflation of the battery pack by means of the explosion-proof valve plugging device due to a small inflation flow rate.

In some embodiments, the explosion-proof valve plugging device further comprises a second driving member in addition to the sealing cover, the magnetic member and the first driving member, wherein the second driving member is in transmission connection with the sealing cover, and the second driving member is configured to drive the sealing cover to cover or move away from the end of the explosion-proof valve that is provided with the valve cover in a first direction. The first driving member and the second driving member can respectively control movements of the magnetic member and the sealing cover, so that the magnetic member can be in contact with the valve cover when the valve cover needs to be opened.

In some embodiments, the explosion-proof valve plugging device further comprises a fixed support configured to be fixedly connected to a valve body of the explosion-proof valve, the sealing cover being movably arranged on the fixed support. The fixed support can guide the movement of the sealing cover.

In some embodiments, the explosion-proof plugging device comprises a first guide rod slidably penetrating the sealing cover in the first direction, wherein one end of the first guide rod is connected to the magnetic member, the other end thereof is connected to the first driving member, and the first driving member drives the first guide rod to move in the first direction, so as to drive the magnetic member to move. The first driving member can drive the magnetic member to move by means of the first guide rod, thereby reducing the implementation difficulty of the first driving member driving the magnetic member to move.

In some embodiments, the explosion-proof valve plugging device further comprises a first elastic member sleeved on the first guide rod, the first elastic member being elastically supported between the magnetic member and the sealing cover. The first elastic member can provide an elastic force to the magnetic member, so that the magnetic member can be in contact with the valve cover.

In some embodiments, the explosion-proof valve plugging device further comprises a second driving member and a second guide rod, wherein the second driving member is in transmission connection with the sealing cover, and the second driving member is configured to drive the sealing cover to cover or move away from the end of the explosion-proof valve that is provided with the valve cover in the first direction. The second guide rod slidably penetrates the fixed support in the first direction, one end of the second guide rod is connected to the sealing cover, and the other end thereof is connected to the second driving member. The second driving member drives the second guide rod to move in the first direction, so as to drive the sealing cover to move. The second driving member can drive the sealing cover to move by means of the second guide rod, thereby reducing the implementation difficulty of the second driving member driving the sealing cover to move.

In some embodiments, the explosion-proof valve plugging device further comprises a second elastic member sleeved on the second guide rod, the second elastic member being elastically supported between the sealing cover and the fixed support. The second elastic member can provide an elastic force to the sealing cover, so that the sealing cover can be attached to an end of the fixed support.

In some embodiments, the second driving member comprises a second cam portion and a second holding portion, and a second axis is rotatably connected to the second guide rod and abuts against the fixed support, an extension direction of the second axis being perpendicular to the first direction. The second holding portion is connected to the second cam portion. A tester can drive the sealing cover to move by manually rotating the second cam portion, so that the operation difficulty is reduced for the tester.

In some embodiments, the explosion-proof valve plugging device comprises a first guide rod and a second guide rod, wherein the first guide rod slidably penetrates the sealing cover in the first direction, one end of the first guide rod is connected to the magnetic member, the other end thereof is connected to the first driving member, and the first driving member drives the first guide rod to move in the first direction, so as to drive the magnetic member to move. The second guide rod is of a hollow structure, and the first guide rod slidably penetrates the second guide rod in the first direction. In such a design, the second guide rod is used as an assembly base of the first guide rod, and the entire structure of the explosion-proof valve plugging device is more compact and occupies less space.

In some embodiments, the first driving member comprises a first holding portion and a first cam portion, the first cam portion is rotatably connected, around a first axis, to an end of the first guide rod away from the magnetic member and abuts against the second guide rod, and the first holding portion is connected to the first cam portion, an extension direction of the first axis being perpendicular to the first direction. The first holding portion is connected to the first cam portion. The tester can drive the magnetic member to move by manually rotating the first cam portion, so that the operation difficulty is reduced for the tester.

In some embodiments, the second guide rod is provided with a connection port, the connection port is configured to be connected to an inflation pipeline, and the first guide rod is provided with a first channel with one end communicating with the connection port and the other end communicating with an internal space of the sealing cover. The connection port and first channel for inflation during the air tightness test are respectively provided in the second guide rod and the first guide rod, thereby simplifying the inflation structure of the explosion-proof valve plugging device.

In some embodiments, the magnetic member is provided with a second channel, and an end of the first channel away from the connection port communicates with the internal space of the sealing cover by means of the second channel. Providing the second channel in the magnetic member enriches the arrangement of the inflation structure of the explosion-proof valve plugging device.

In some embodiments, the explosion-proof valve plugging device further comprises a fixed support configured to be fixedly connected to a valve body of the explosion-proof valve, the sealing cover being movably arranged on the fixed support. The first driving member and the second driving member are both arranged outside the fixed support. Such a design makes the assembly of the first driving member and the second driving member more convenient.

In some embodiments, the fixed support comprises a top wall and a side wall, the side wall is arranged around the top wall, an end of the side wall is connected to the top wall to form a cavity configured to accommodate the explosion-proof valve.

In some embodiments, the side wall is provided with an opening, and a flange for limiting of and engagement with the explosion-proof valve is provided at an end of the side wall away from the top wall in a protruding manner. The flange enables the explosion-proof valve to be stably assembled into the fixed support, thereby improving tightness of connection between the explosion-proof valve and the fixed support.

In some embodiments, the explosion-proof valve plugging device further comprises a probe rod and a fixed support, wherein the probe rod slidably penetrates the sealing cover and the top wall in the first direction, an end of the probe rod extends into the sealing cover, and the probe rod is configured to abut against the valve cover to measure a height to which the valve cover is opened. The probe rod can measure the height to which the valve cover is opened, so that a size of the inflation opening at an end of the valve cover of the explosion-proof valve is substantially the same as an opening size required by the design, thereby reducing the risk of reduced inflation flow rate during inflation of the explosion-proof valve by means of the explosion-proof valve plugging device due to less inflation opening at an end of the valve cover of the explosion-proof valve than a design value.

In some embodiments, the probe rod comprises a limiting portion located between the top wall and the sealing cover for limiting separation of the probe rod from the top wall. In such a design, a part of the probe rod is always located outside the fixed support, and the tester can visually determine whether to open the valve cover, thereby reducing the possibility of missing measurement due to non-opening of the valve cover.

In some embodiments, the explosion-proof valve plugging device further comprises a probe rod slidably penetrating the sealing cover, wherein an end of the probe rod extends into the sealing cover, and the probe rod is configured to abut against the valve cover to measure a height to which the valve cover is opened. The probe rod can measure the height to which the valve cover is opened, so that a size of the inflation opening at an end of the valve cover of the explosion-proof valve is substantially the same as an opening size required by the design, thereby reducing the risk of reduced inflation flow rate during inflation of the explosion-proof valve by means of the explosion-proof valve plugging device due to less inflation opening at an end of the valve cover of the explosion-proof valve than a design value.

In some embodiments, a scale for indicating the height to which the valve cover is opened is provided on the probe rod. The height to which the valve cover is opened can be directly read by means of the scale.

In some embodiments, the sealing cover is provided with a second through hole for the probe rod to pass through, and a sealing member for forming an airtight connection between the probe rod and the sealing cover is arranged in the second through hole. When the probe rod moves with the valve cover, the sealing member can improve the air tightness inside the sealing cover.

### Brief Description of the Drawings

Various other advantages and benefits will become apparent to those of ordinary skill in the art upon reading the following detailed description of preferred implementations. Accompanying drawings are merely for the purpose of illustrating the preferred implementations and are not to be construed as limiting the present application. Moreover, like components are denoted by like reference signs throughout the accompanying drawings. In the drawings:
FIG. 1 is a partial sectional view of an explosion-proof valve plugging device according to some embodiments of the present application;
FIG. 2 is a partial enlarged view of part A in FIG. 1 according to the present application;
FIG. 3 is a partial sectional view of an explosion-proof valve plugging device according to some other embodiments of the present application;
FIG. 4 is a partial enlarged view of part B in FIG. 3 according to the present application;
FIG. 5 is a partial sectional view of an explosion-proof valve plugging device according to still other embodiments of the present application;
FIG. 6 is a partial enlarged view of part C in FIG. 5 according to the present application;
FIG. 7 is an isometric view of an explosion-proof valve plugging device according to some embodiments of the present application;
FIG. 8 is a partial sectional view of an explosion-proof valve plugging device according to yet other embodiments of the present application;
FIG. 9 is a partial sectional view of an explosion-proof valve plugging device according to other embodiments of the present application;
FIG. 10 is a partial enlarged view of part D in FIG. 9 according to the present application;
FIG. 11 is a partial sectional view of an explosion-proof valve plugging device according to other embodiments of the present application, showing a second channel;
FIG. 12 is a partial enlarged view of part E in FIG. 11 according to the present application;
FIG. 13 is an isometric view of a magnetic member according to some embodiments of the present application; and
FIG. 14 is an isometric view of a fixed support according to some embodiments of the present application.

Reference Signs in Detailed Description of Embodiments:
1 - Fixed support; 11 - Top wall; 111 - Second through hole; 112 - Third through hole; 12 - Side wall; 121 - Flange; 122 - Opening; 2 - Sealing cover; 3 - Magnetic member; 31 - Second channel; 311 - First through hole; 312 - Groove; 32 - First surface; 33 - Second surface; 4 - First guide rod; 43 - First channel; 5 - Second guide rod; 51 - Connection port; 6 - First driving member; 61 - First cam portion; 611 - Second limiting surface; 612 - Third limiting surface; 613 - Fourth limiting surface; 62 - First holding portion; 7 - Second driving member; 71 - Second cam portion; 711 - First limiting surface; 72 - Second holding portion; 8 - First elastic member; 9 - Second elastic member; 10 - Probe rod; 101 - Limiting portion; 13 - First sealing ring; 14 - Sealing member; 15 - Second sealing ring; 16 - Explosion-proof valve; 161 - Valve cover; 162 - Valve body; X - First direction; a - First axis; b - Second axis.

### Detailed Description of Embodiments

In the description of the embodiments of the present application, the technical terms "first", "second", etc. are merely used for distinguishing different objects, and cannot be construed as indicating or implying relative importance or implicitly indicating the number, particular order or primary-secondary relationship of the indicated technical features. In the description of the embodiments of the present application, the phrase "a plurality of" means two or more, unless otherwise explicitly and specifically defined.

The phrase "embodiment" mentioned herein means that the specific features, structures, or characteristics described in conjunction with the embodiment can be encompassed in at least one embodiment of the present application. The phrase at various locations in the description does not necessarily refer to the same embodiment, or an independent or alternative embodiment exclusive of another embodiment. Those skilled in the art understand explicitly or implicitly that the embodiment described herein may be combined with another embodiment.

In the description of the embodiments of the present application, the term "a plurality of" means two or more (including two), similarly, the term "a plurality of groups" means two or more groups (including two groups), and the term "a plurality of pieces" means two or more pieces (including two pieces).

In the description of the embodiments of the present application, the orientation or position relationship indicated by the technical terms "central", "longitudinal", "transverse", "length", "width", "thickness", "upper", "lower", "front"; "rear", "left", "right", "vertical", "horizontal", "top", "bottom", "inner", "outer", "clockwise", "counterclockwise", "axial", "radial", "circumferential", etc. are based on the orientation or position relationship shown in the accompanying drawings and are merely intended to facilitate and simplify the description of the embodiments of the present application, rather than indicating or implying that the device or element referred to must have a particular orientation or be constructed and operated in a particular orientation, and therefore cannot be construed as limiting the embodiments of the present application.

In the description of the embodiments of the present application, unless otherwise explicitly specified and defined, the technical terms such as "mount", "connected", "connect", and "fix" should be understood in a broad sense, for example, they may be a fixed connection, a detachable connection, or an integrated connection; may be a mechanical connection or an electric connection; and may be a direct connection or an indirect connection by means of an intermediate medium, or may be internal communication between two elements or interaction between the two elements. For those of ordinary skill in the art, the specific meanings of the above terms in the embodiments of the present application can be understood according to specific situations.

A battery pack comprises a case and battery cells arranged in the case, and an explosion-proof valve is usually arranged on the case, so as to relieve an internal pressure or heat of the battery pack in a timely manner when the battery pack is subjected to thermal runaway. The explosion-proof valve refers to a component that is activated, when the internal pressure or temperature of the battery pack reaches a predetermined threshold, to relieve the internal pressure or heat. When the internal pressure or temperature of the battery pack reaches the threshold, the explosion-proof valve acts, so as to form an opening or channel for relief of the internal pressure or heat.

The explosion-proof valve comprises a valve body, a valve cover and a spring. The valve cover plugs an opening of the valve body under the action of the spring. When the internal pressure or temperature of the battery pack reaches the threshold, the valve cover is opened under the action of the internal pressure of the battery pack, so that the opening of the valve body communicates an interior of the battery pack with the outside, so as to relieve the internal pressure or heat of the battery pack.

Energy conservation and emission reduction are the keys to the sustainable development of the automobile industry. In this case, new energy electric vehicles have become an important part of the sustainable development of the automobile industry due to their advantages in energy conservation and environmental protection. Further, for the electric vehicles, the battery technology is an important factor to their development.

After the battery pack is assembled, it is necessary to test air tightness of the battery pack to determine waterproof and dustproof capability of the battery pack. During test, it is necessary to inflate the interior of the battery pack and test the internal pressure of the battery pack, so as to achieve the purpose of testing the air tightness of the battery pack. In addition, during the air tightness test of the battery pack, it is necessary to effectively plug the explosion-proof valve, so as to improve accuracy of the explosion-proof valve air tightness testing structure.

When the battery pack is being inflated, a case in which the inflation is unstable and the battery pack cannot be normally inflated with an air often occurs. The reason for the above case may be that a conventional explosion-proof valve plugging device can only attract the valve cover from a distance by means of a magnet, and a gap formed by pulling up the valve cover is small, and an opening state is unstable, which leads to intermittent inflating air flow, thereby seriously affecting inflation stability and inflation efficiency.

In view of this, the present application provides an explosion-proof valve plugging device, such that before the battery pack is inflated, a first driving member is used to first drive a magnetic member to come into contact with and attract the valve cover, and then drive the magnetic member to drive the valve cover to be opened. As a result, the magnetic member has a certain travel, so that a height to which the valve cover is pulled up is enough, reducing the risk of low efficiency of inflation of the battery pack by means of the explosion-proof valve plugging device due to a small inflation flow rate.

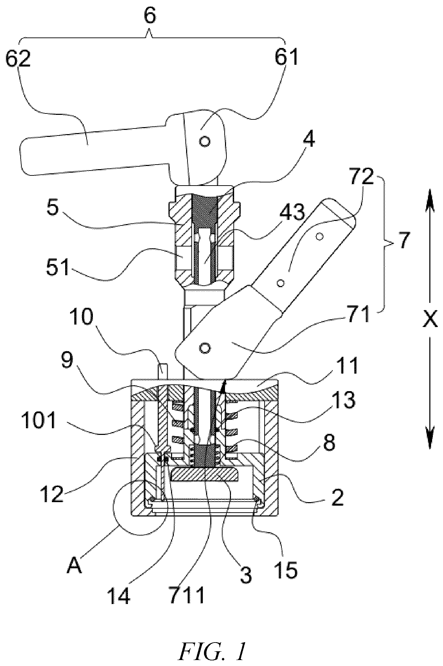

According to some embodiments of the present application, referring to FIGS. 1, 5 and 6, the present application provides an explosion-proof valve plugging device, which comprises a sealing cover 2, a magnetic member 3 and a first driving member 6, wherein the sealing cover 2 is configured to cover an end of an explosion-proof valve 16 that is provided with a valve cover 161. The magnetic member 3 is arranged in the sealing cover 2, and the magnetic member 3 is configured to attract the valve cover 161. The first driving member 6 is in transmission connection with the magnetic member 3, and is configured to drive the magnetic member 3 to move relative to the sealing cover 2, such that the magnetic member 3 comes into contact with the valve cover 161 and drives the valve cover 161 to be opened.

The magnetic member 3 may be an electromagnet, a permanent magnet, etc.

The magnetic member 3 may be in the shape of a cylinder, a ring, a cuboid, etc.

It should be noted that, the magnetic member 3 can be driven by the first driving member 6 to move relative to the sealing cover 2 inside the sealing cover 2, and only when at least one surface of the magnetic member 3 comes into contact with a top surface of the valve cover 161 can the valve cover 161 be driven to be opened.

The first driving member 6 may be a linear reciprocating driving member, such as a piston cylinder and a linear electric motor. In some embodiments, the first driving member 6 is a piston cylinder, a piston rod of the piston cylinder is connected to a first adapter, the first adapter penetrates the sealing cover 2 and has an end connected to the magnetic member 3, and the first adapter can slide in a first direction X, so that a reciprocating motion of the piston cylinder can drive the magnetic member 3 to move by means of the first adapter.

In some embodiments, the first driving member 6 may also be an eccentric cam, the eccentric cam is rotatably connected to a first adapter, the first adapter penetrates the sealing cover 2 and has an end connected to the magnetic member 3, and the first adapter can slide in a first direction X, so that rotation of the eccentric cam can drive the magnetic member 3 to move by means of the first adapter. It should be noted that the eccentric cam can be rotated by means of an electric motor or manual operation by a tester.

After the explosion-proof valve plugging device plugs the explosion-proof valve 16, the first driving member 6 first drives the magnetic member 3 to come into contact with and attract the valve cover 161, and then drives the magnetic member 3 to drive the valve cover 161 to be opened. As a result, the magnetic member 3 has a certain travel, so that a height to which the valve cover 161 is pulled up is enough, reducing the risk of low efficiency of inflation of the battery pack by means of the explosion-proof valve plugging device due to a small inflation flow rate.

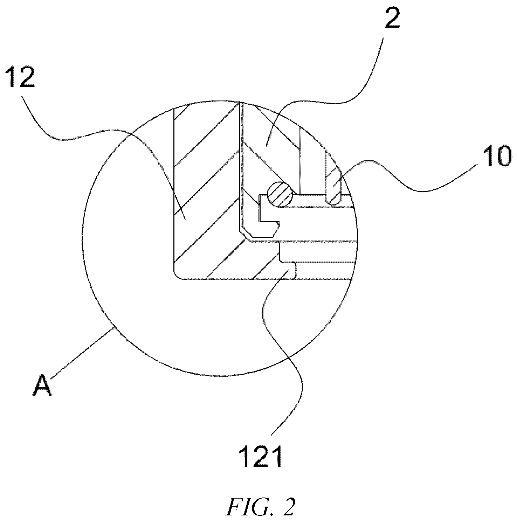

According to some embodiments of the present application, referring to FIGS. 2 to 6, the explosion-proof valve plugging device further comprises a second driving member 7 in addition to the sealing cover 2, the magnetic member 3 and the first driving member 6, wherein the second driving member 7 is in transmission connection with the sealing cover 2, and is configured to drive the sealing cover 2 to cover or move away from the end of the explosion-proof valve 16 that is provided with the valve cover 161 in the first direction X.

The second driving member 7 may be a linear reciprocating driving member, such as a piston cylinder and a linear electric motor. In some embodiments, the second driving member 7 is a piston cylinder, a piston rod of the piston cylinder is connected to a second adapter, the second adapter penetrates a fixed support 1 and has an end connected to the sealing cover 2, and the second adapter can slide in the first direction X, so that a reciprocating motion of the piston cylinder can drive the sealing cover 2 to move by means of the second adapter.

It should be noted that the first adapter and the second adapter may be arranged coaxially or in different axes.

In some embodiments, the first adapter and the second adapter are coaxially arranged, the first adapter penetrates the second adapter, the first driving member 6 is a first piston cylinder, the second driving member 7 is a second piston cylinder, a piston rod of the first piston cylinder is coaxial with the first adapter, and a piston rod of the second piston cylinder is located on a side of the piston rod of the first piston cylinder but is connected to the second adapter.

In some embodiments, the second driving member 7 may also be an eccentric cam, the eccentric cam is rotatably connected to a second adapter, the second adapter penetrates the sealing cover 2 and has an end connected to the sealing cover 2, and the second adapter can slide in the first direction X, so that rotation of the eccentric cam can drive the sealing cover 2 to move by means of the second adapter. It should be noted that the eccentric cam can be rotated by means of an electric motor or manual operation by the tester.

In some embodiments, the first adapter and the second adapter are coaxially arranged, the first adapter penetrates the second adapter, the first driving member 6 is a first eccentric cam, the second driving member 7 is a second eccentric cam, the first eccentric cam may be assembled to a top end of the first adapter, and the second eccentric cam may be assembled to an outer side of the second adapter, so as to reduce the possibility of interference when the first eccentric cam and the second eccentric cam rotate.

The second driving member 7 can drive the sealing cover 2 to move relative to the fixed support 1 to make room for assembly of the explosion-proof valve 16, thereby making the assembly of the explosion-proof valve 16 and the fixed support 1 more convenient. In addition, the first driving member 6 and the second driving member 7 can respectively control movements of the magnetic member 3 and the sealing cover 2, so that the magnetic member 3 can be in contact with the valve cover 161 when the valve cover 161 needs to be opened.

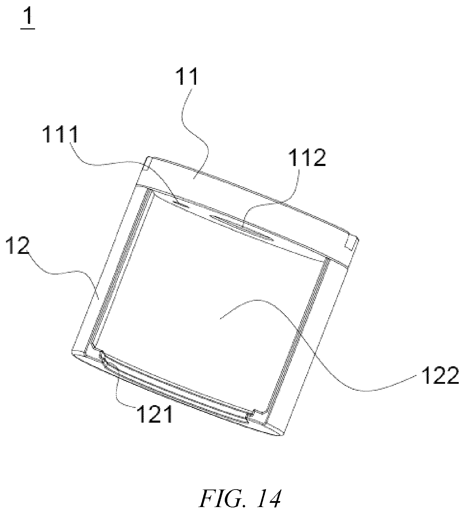

According to some embodiments of the present application, referring to FIG. 14, the explosion-proof valve plugging device further comprises a fixed support 1. The fixed support 1 is configured to be fixedly connected to a valve body 162 of the explosion-proof valve 16, and the sealing cover 2 is movably arranged on the fixed support 1.

The fixed support 1 may be fixedly connected to the valve body 162 by means of a spring clamp, or may be fixedly connected to the valve body 162 by providing an opening 122 for the valve body 162 to extend therethrough and forming an engagement block that is on an inner side of the opening 122 and matches an outer edge of the valve body 162.

The fixed support 1 can guide the movement of the sealing cover 2.

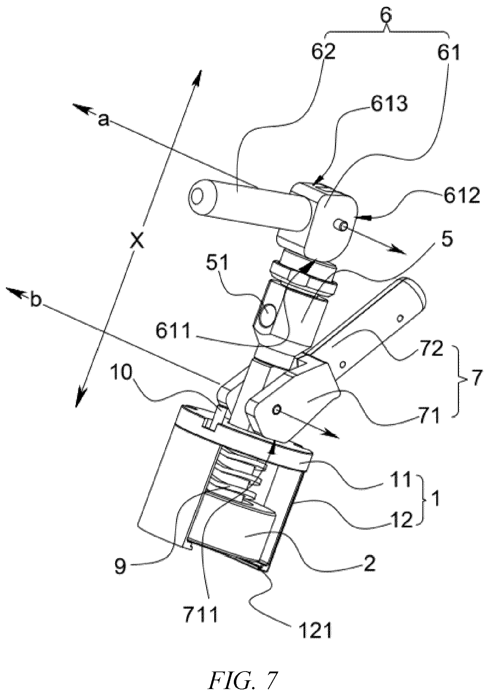

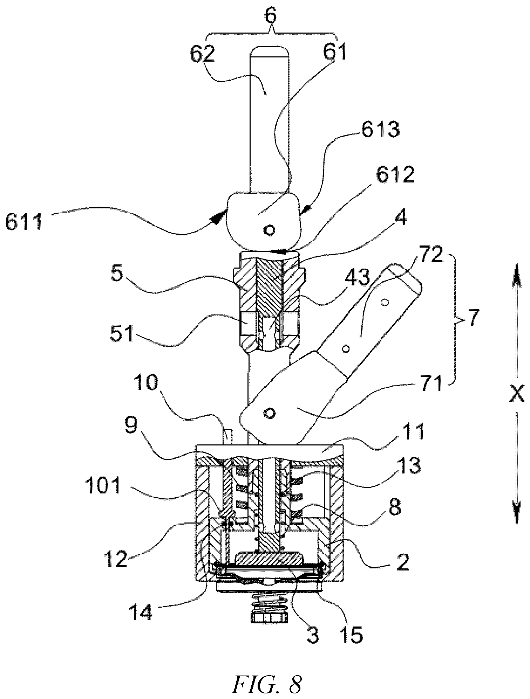

According to some embodiments of the present application, referring to FIGS. 7 and 8, the explosion-proof plugging device comprises a first guide rod 4. The first guide rod 4 slidably penetrates the sealing cover 2 in the first direction X. One end of the first guide rod 4 is connected to the magnetic member 3, the other end thereof is connected to the first driving member 6, and the first driving member 6 drives the first guide rod 4 to move in the first direction X, so as to drive the magnetic member 3 to move.

The first direction X refers to an axial direction of the first guide rod 4.

The first guide rod 4 is the aforementioned first adapter.

The first guide rod 4 may be in the shape of a cylinder or a cuboid, or the first guide rod 4 may also be formed by assembling at least one section of cylinder and at least one section of cuboid.

The first driving member 6 can drive the magnetic member 3 to move by means of the first guide rod 4, thereby reducing the implementation difficulty of the first driving member 6 driving the magnetic member 3 to move.

According to some embodiments of the present application, referring to FIG. 8, the explosion-proof valve plugging device further comprises a first elastic member 8. The first elastic member 8 is sleeved on the first guide rod 4, and the first elastic member 8 is elastically supported between the magnetic member 3 and the sealing cover 2.

The first elastic member 8 may be a spring or an elastic sheet, etc.

An end of the first elastic member 8 that is in contact with the magnetic member 3 may or may not be connected to the magnetic member 3; and an end of the first elastic member 8 that is in contact with the sealing cover 2 may or may not be connected to the sealing cover 2. It should be noted that in some embodiments, the first elastic member 8 is always in a compressed state to provide an elastic force.

The first elastic member 8 can provide the elastic force to the magnetic member 3, so that the magnetic member 3 can be in contact with the valve cover 161.

According to some embodiments of the present application, referring to FIGS. 7 and 8, the explosion-proof valve plugging device further comprises a second driving member 7 and a second guide rod 5, wherein the second driving member 7 is in transmission connection with the sealing cover 2, and the second driving member 7 is configured to drive the sealing cover 2 to cover or move away from the end of the explosion-proof valve 16 that is provided with the valve cover 161 in the first direction X. The second guide rod 5 slidably penetrates the fixed support 1 in the first direction X. One end of the second guide rod 5 is connected to the sealing cover 2, the other end thereof is connected to the second driving member 7, and the second driving member 7 drives the second guide rod 5 to move in the first direction X, so as to drive the sealing cover 2 to move.

The second guide rod 5 is the aforementioned second adapter.

The second guide rod 5 may be in the shape of a cylinder or a cuboid, or the second guide rod 5 may be formed by assembling at least one section of cylinder and at least one section of cuboid.

A through hole is machined in the second guide rod 5 along an axis of the second guide rod, or the second guide rod may be a solid guide rod. In some embodiments, if a through hole is machined in the second guide rod 5 along an axis of the second guide rod, the first guide rod 4 can penetrate the second guide rod 5 through the above hole.

In some embodiments, referring to FIG. 14, a third through hole 112 may be machined in the fixed support 1, and the second guide rod 5 penetrates the third through hole 112 and is slidably connected to the third through hole 112.

The second driving member 7 can drive the sealing cover 2 to move by means of the second guide rod 5, thereby reducing the implementation difficulty of the second driving member 7 driving the sealing cover 2 to move.

According to some embodiments of the present application, referring to FIGS. 7 and 8, the explosion-proof valve plugging device further comprises a second elastic member 9. The second elastic member 9 is sleeved on the second guide rod 5, and the second elastic member 9 is elastically supported between the sealing cover 2 and the fixed support 1.

The second elastic member 9 may be a spring or an elastic sheet, etc.

An end of the second elastic member 9 that is in contact with the sealing cover 2 may or may not be connected to the sealing cover 2; and an end of the second elastic member 9 that is in contact with the fixed support 1 may or may not be connected to the fixed support 1. It should be noted that in some embodiments, the second elastic member 9 is always in a compressed state.

The second elastic member 9 can provide an elastic force to the sealing cover 2, so that the sealing cover 2 can be attached to an end of the fixed support 1.

According to some embodiments of the present application, referring to FIGS. 1 to 7, the second driving member 7 comprises a second cam portion 71 and a second holding portion 72, and a second axis b is rotatably connected to the second guide rod 5 and abuts against the fixed support 1, an extension direction of the second axis b being perpendicular to the first direction X. The second holding portion 72 is connected to the second cam portion 71.

The second cam portion 71 may be one plate or two plates. In some embodiments, when the second cam portion 71 is two plates, the two plates are arranged symmetrically with respect to a central axis of the second guide rod 5.

The second holding portion 72 may be integrally formed with the second cam portion 71, or the second holding portion 72 may be connected, by means of a fastener, or welded to the second cam portion 71.

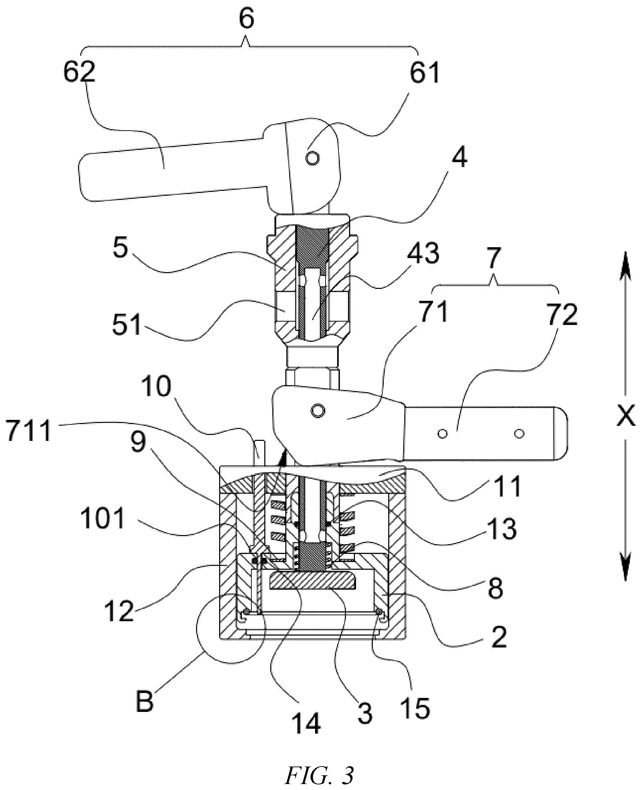

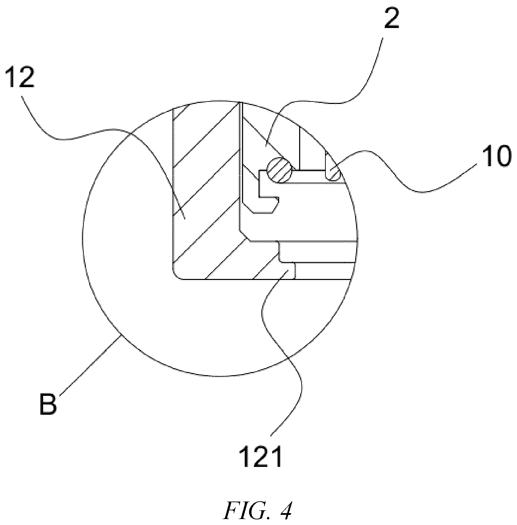

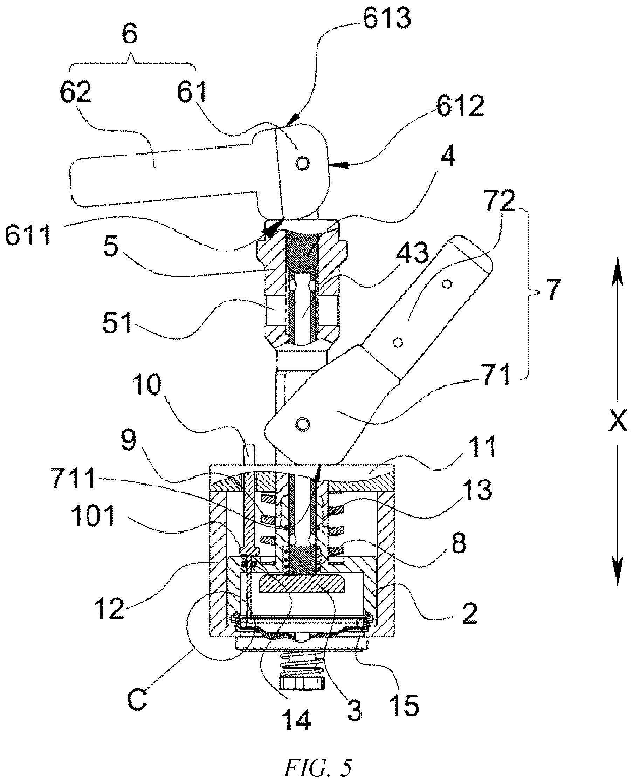

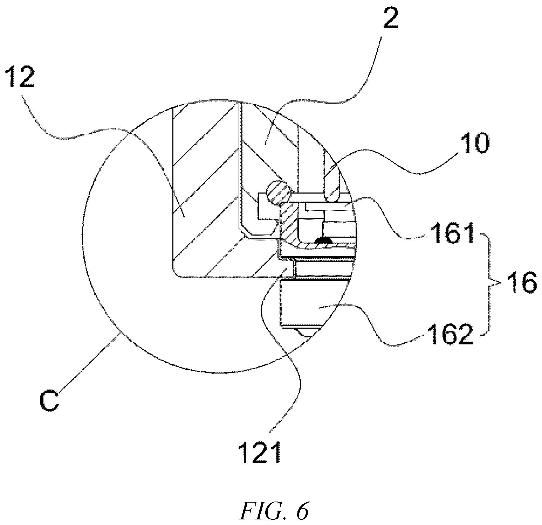

Referring to FIG. 1, the second cam portion 71 is circumferentially provided with a first limiting surface 711. When the second driving member 7 is in an initial position, the first limiting surface 711 abuts against the fixed support 1. Referring to FIGS. 1 and 2, the second cam portion 71 is in the initial position, the first limiting surface 711 is attached to the fixed support 1 for limiting, a bottom surface of the sealing cover 2 is attached to the fixed support 1, and the explosion-proof valve 16 cannot be assembled with the fixed support 1. Referring to FIGS. 3 and 4, the second cam portion 71 drives the sealing cover 2 to move in the first direction X relative to the fixed support 1 by means of the second guide rod 5, and an assembly space for the explosion-proof valve 16 to enter the fixed support 1 is formed between a lower portion of the sealing cover 2 and the fixed support 1. At this time, the tester can mount the explosion-proof valve 16 into the fixed support 1, and then control the second cam portion 71 to return to the initial position. Referring to FIGS. 5 and 6, after the second cam portion 71 is reset, the sealing cover 2 forms a sealed cavity with the valve body 162.

The tester can drive the sealing cover 2 to move by manually rotating the second cam portion 71, so that the operation difficulty is reduced for the tester.

According to some embodiments of the present application, referring to FIG. 8, the explosion-proof valve plugging device comprises a first guide rod 4 and a second guide rod 5. The first guide rod 4 slidably penetrates the sealing cover 2 in the first direction X, one end of the first guide rod 4 is connected to the magnetic member 3, the other end thereof is connected to the first driving member 6, and the first driving member 6 drives the first guide rod 4 to move in the first direction X, so as to drive the magnetic member 3 to move. The second guide rod 5 is of a hollow structure, and the first guide rod 4 slidably penetrates the second guide rod 5 in the first direction X.

The hollow structure means that the second guide rod 5 is provided with a through hole along an axis of the second guide rod, and the first guide rod 4 can slide in the above hole.

In some embodiments, the above hole is a square hole, the first guide rod 4 is in the shape of a cuboid matching the above square hole, and the first guide rod 4 can only slide in the first direction X and cannot rotate in a circumferential direction of the first guide rod 4.

The second guide rod 5 is used as an assembly base of the first guide rod 4, and the entire structure of the explosion-proof valve plugging device is more compact and occupies less space.

According to some embodiments of the present application, referring to FIGS. 5 to 10, the first driving member 6 comprises a first holding portion 62 and a first cam portion 61, the first cam portion 61 is rotatably connected, around a first axis a, to an end of the first guide rod 4 away from the magnetic member 3 and abuts against the second guide rod 5, and the first holding portion 62 is connected to the first cam portion 61, an extension direction of the first axis a being perpendicular to the first direction X. The first holding portion 62 is connected to the first cam portion 61.

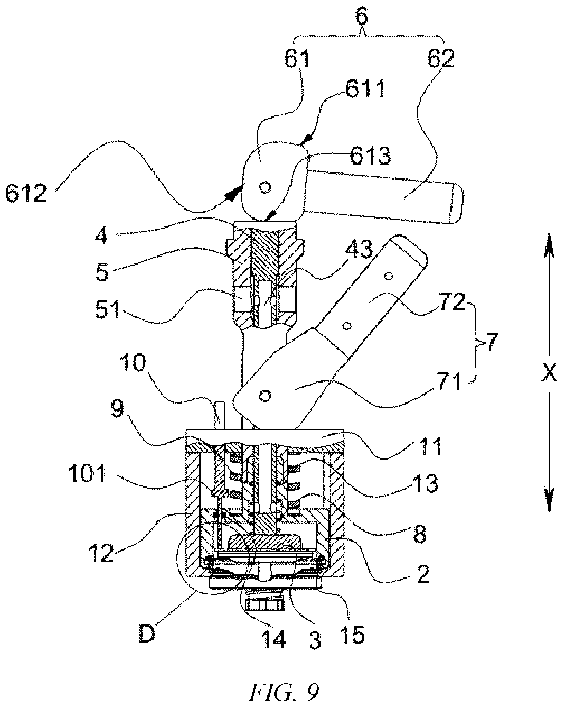

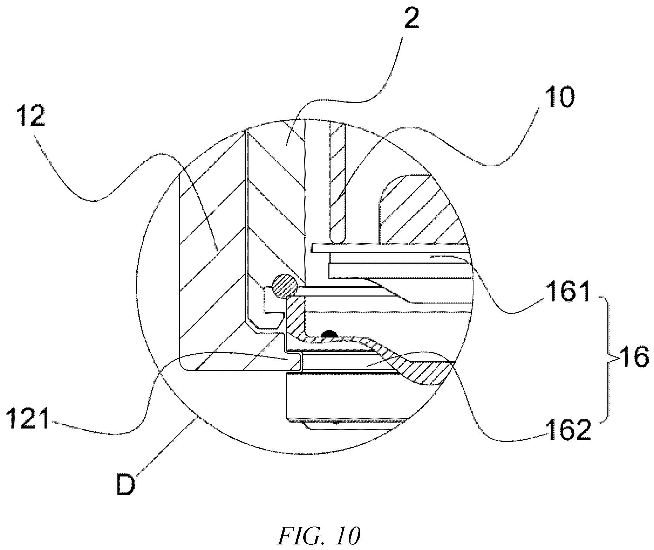

Referring to FIG. 5, the first cam portion 61 is in an initial position, a second limiting surface 611 abuts against the second guide rod 5 for limiting, and there is a first distance between the magnetic member 3 and the valve body 162. Referring to FIG. 8, the first cam portion 61 is in a middle position, a third limiting surface 612 abuts against the second guide rod 5 for limiting, the magnetic member 3 is in contact with the valve cover 161, and at this time, the distance between the magnetic member 3 and the valve body 162 is zero. Referring to FIGS. 9 and 10, the first cam portion 61 is in an operating position, a fourth limiting surface 613 abuts against the second guide rod 5 for limiting, the magnetic member 3 pulls the valve cover 161 to a design height, the valve cover 161 and the valve body 162 are separated from each other to form an inflation opening, and at this time, the distance between the magnetic member 3 and the valve body 162 is a second distance. It should be noted that the first distance needs to be greater than the second distance.

The first cam portion 61 may be one plate or two plates. In some embodiments, when the first cam portion 61 is two plates, the two plates are arranged symmetrically with respect to a central axis of the first guide rod 4.

The first holding portion 62 may be integrally formed with the first cam portion 61, or the first holding portion 62 may be connected, by means of a fastener, or welded to the first cam portion 61.

The tester can drive the magnetic member 3 to move by manually rotating the first cam portion 61, so that the operation difficulty is reduced for the tester.

According to some embodiments of the present application, referring to FIG. 9, the second guide rod 5 is provided with a connection port 51, the connection port 51 is configured to be connected to an inflation pipeline, and the first guide rod 4 is provided with a first channel 43 with one end communicating with the connection port 51 and the other end communicating with an internal space of the sealing cover 2.

The first channel 43 for inflation by means of the explosion-proof valve plugging device may be provided inside the first guide rod 4, or an air pipe may be additionally arranged outside the first guide rod 4 to form the first channel 43.

The connection port 51 in the second guide rod 5 needs to communicate with one end of the first channel 43 during inflation by means of the explosion-proof valve plugging device, and at this time, the other end of the first channel 43 communicates with the internal space of the sealing cover 2.

The connection port 51 and first channel 43 for inflation during the air tightness test are respectively provided in the second guide rod 5 and the first guide rod 4, thereby simplifying the inflation structure of the explosion-proof valve plugging device.

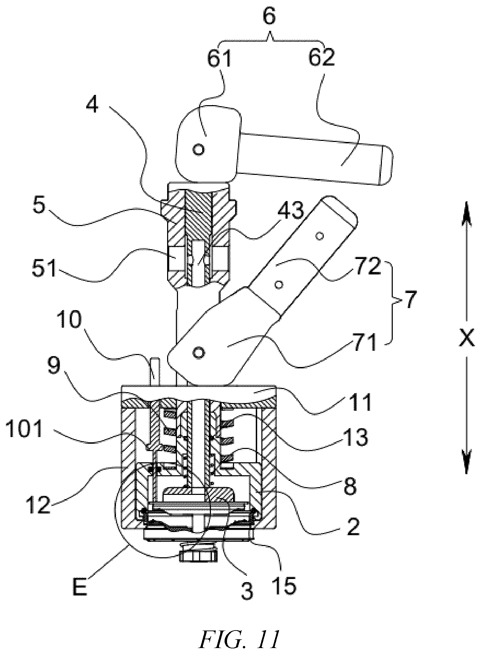

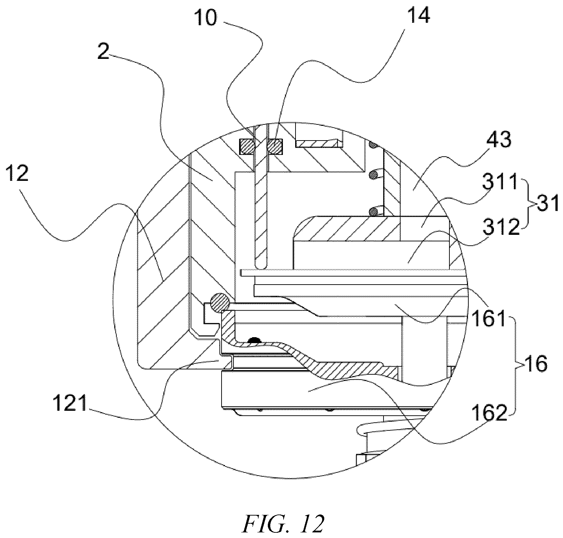

According to some embodiments of the present application, referring to FIGS. 11 and 12, the magnetic member 3 is provided with a second channel 31, and an end of the first channel 43 away from the connection port 51 communicates with the internal space of the sealing cover 2 by means of the second channel 31.

An air outlet of the second channel 31 needs to communicate with the internal space of the sealing cover 2 when the magnetic member 3 is attached to the valve cover 161.

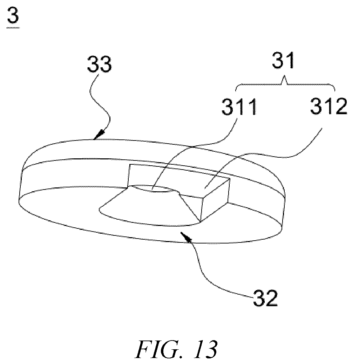

In some embodiments, the magnetic member 3 comprises a first surface 32 for being in contact with the valve cover 161 and a second surface 33 facing away from the first surface 32, the second channel 31 comprises a first through hole 311 provided in the second surface 33 and a groove 312 provided in the first surface 32, the first through hole 311 communicates with the first channel 43, one end of the groove 312 communicates with the first through hole 311, and the other end of the groove 312 extends to an edge of the first surface 32. Refer to FIG. 13, the first surface 32 is a lower surface of the magnetic member 3, and the second surface 33 is an upper surface of the magnetic member 3.

Providing the second channel 31 in the magnetic member 3 enriches the arrangement of the inflation structure of the explosion-proof valve plugging device.

According to some embodiments of the present application, referring to FIG. 11, the explosion-proof valve plugging device further comprises a fixed support 1. The fixed support 1 is configured to be fixedly connected to a valve body 162 of the explosion-proof valve 16, and the sealing cover 2 is movably arranged on the fixed support 1. The first driving member 6 and the second driving member 7 are both arranged outside the fixed support 1.

Such a design makes the assembly of the first driving member 6 and the second driving member 7 more convenient.

According to some embodiments of the present application, referring to FIG. 14, the fixed support 1 comprises a top wall 11 and a side wall 12, the side wall 12 is arranged around the top wall 11, an end of the side wall 12 is connected to the top wall 11 to form a cavity configured to accommodate the explosion-proof valve 16.

In some embodiments, the explosion-proof valve 16 can enter the cavity through a bottom of the side wall 12, the side wall 12 is tubular, and the valve cover 161 is engaged with the fixed support 1 by means of an elastic engagement block arranged on an inner side of the side wall 12; or an opening 122 may be provided in a side surface of the side wall 12, so that the explosion-proof valve 16 can enter the cavity from the side surface of the side wall 12 through the opening 122.

According to some embodiments of the present application, referring to FIG. 14, the side wall 12 is provided with an opening 122, and a flange 121 for limiting of and engagement with the explosion-proof valve 16 is provided at an end of the side wall 12 away from the top wall 11 in a protruding manner.

The flange 121 needs to match the circumferential groove 312 of the valve body 162 of the explosion-proof valve 16 in order to implement engagement between the valve body 162 and the fixed support 1.

The flange 121 enables the explosion-proof valve 16 to be stably assembled into the fixed support 1, thereby improving tightness of connection between the explosion-proof valve 16 and the fixed support 1.

According to some embodiments of the present application, referring to FIG. 11, the explosion-proof valve plugging device further comprises a probe rod 10 and a fixed support 1. The probe rod 10 slidably penetrates the sealing cover 2 and the top wall 11 in the first direction X, an end of the probe rod 10 extends into the sealing cover 2, and the probe rod 10 is configured to abut against the valve cover 161 to measure a height to which the valve cover 161 is opened.

The probe rod 10 may be in the shape of a cylinder, a cuboid, a hexagonal prism, etc.

The probe rod 10 can measure the height to which the valve cover 161 is opened, so that the inflation opening at an end of the valve cover 161 of the explosion-proof valve 16 is opened to the size required by the design, to enable the inflation flow rate to substantially meet design requirements. Moreover, after the magnetic member 3 attracts the valve cover 161, when the valve cover 161 is being opened, whether the magnetic member 3 attracts the valve cover 161 and drives the valve cover 161 to be opened can be determined by means of a lifting movement of the probe rod 10.

According to some embodiments of the present application, referring to FIG. 11, the probe rod 10 comprises a limiting portion 101, and the limiting portion 101 is located between the top wall 11 and the sealing cover 2 for limiting separation of the probe rod 10 from the top wall 11.

In some embodiments, the limiting portion 101 may be an annular protrusion arranged in a circumferential direction of the probe rod 10 or a stepped surface formed in the circumferential direction of the probe rod 10.

The fact that the probe rod 10 is not separated from the top wall 11 means that at least a part of the probe rod 10 is located above the top wall 11 of the fixed support 1.

In such a design, a part of the probe rod 10 is always located outside the fixed support 1, and the tester can visually determine whether to open the valve cover 161, thereby reducing the possibility of missing measurement due to non-opening of the valve cover 161.

According to some embodiments of the present application, referring to FIG. 11, the explosion-proof valve plugging device further comprises a probe rod 10. The probe rod 10 slidably penetrates the sealing cover 2, an end of the probe rod 10 extends into the sealing cover 2, and the probe rod 10 is configured to abut against the valve cover 161 to measure a height to which the valve cover 161 is opened.

In some embodiments, a hole may be machined in a top of the sealing cover 2, and an end of the probe rod 10 passes through the above hole, is slidably connected to the above hole, and abuts against the valve cover 161.

A scale may be provided on an outer side of the probe rod 10 to show the height to which the valve cover 161 is opened.

The probe rod 10 can measure the height to which the valve cover 161 is opened, so that the inflation opening at an end of the valve cover 161 of the explosion-proof valve 16 is opened to the size required by the design, to enable the inflation flow rate to substantially meet design requirements.

According to some embodiments of the present application, referring to FIG. 11, a scale for indicating the height to which the valve cover 161 is opened is provided on the probe rod 10.

The height to which the valve cover 161 is opened can be directly read by means of the scale.

According to some embodiments of the present application, the sealing cover 2 is provided with a second through hole 111 for the probe rod 10 to pass through, and a sealing member 14 for forming an airtight connection between the probe rod 10 and the sealing cover 2 is arranged in the second through hole 111.

The sealing member 14 may be made of fluorosilicone rubber, fluoroelastomer, silicone rubber, nitrile, etc.

When the probe rod 10 moves with the valve cover 161, the sealing member 14 can improve the air tightness inside the sealing cover 2.

According to some embodiments of the present application, referring to FIGS. 1 to 10, the present application provides an explosion-proof valve plugging device, which comprises a sealing cover 2, a magnetic member 3, a first driving member 6, a fixed support 1, a second driving member 7, a first guide rod 4, a first elastic member 8, a second guide rod 5, a second elastic member 9 and a probe rod 10.

The fixed support 1 comprises a top wall 11 and a side wall 12, the side wall 12 is arranged around the top wall 11, the side wall 12 is provided with an opening 122, an end of the side wall 12 is connected to the top wall 11, and a flange 121 extending inwards is formed at the other end thereof. The probe rod 10 slidably penetrates the sealing cover 2 in the first direction X, an end of the probe rod 10 is configured to abut against the valve cover 161, and a scale for indicating the height to which the valve cover 161 is opened is provided on the probe rod 10.

The magnetic member 3 is arranged in the sealing cover 2, and the sealing cover 2 is arranged in the fixed support 1. The second guide rod 5 is of a hollow structure, and the first guide rod 4 slidably penetrates the second guide rod 5 in the first direction X. An end of the first guide rod 4 is connected to the magnetic member 3. The first elastic member 8 is sleeved on the first guide rod 4, and the first elastic member 8 is elastically supported between the magnetic member 3 and the sealing cover 2. The second guide rod 5 slidably penetrates the fixed support 1 in the first direction X, and an end of the second guide rod 5 is connected to the sealing cover 2. The second elastic member 9 is sleeved on the second guide rod 5, and the second elastic member 9 is elastically supported between the sealing cover 2 and the fixed support 1.

The first driving member 6 comprises a first holding portion 62 and a first cam portion 61, the first cam portion 61 is rotatably connected, around a first axis a, to an end of the first guide rod 4 away from the magnetic member 3 and abuts against the second guide rod 5, and the first holding portion 62 is connected to the first cam portion 61, an extension direction of the first axis a being perpendicular to the first direction X.

The second driving member 7 comprises a second holding portion 72 and a second cam portion 71, the second cam portion 71 is rotatably connected to the second guide rod 5 around a second axis b and abuts against the fixed support 1, and the second holding portion 72 is connected to the second cam portion 71, an extension direction of the second axis b being perpendicular to the first direction X.

The second guide rod 5 is provided with a connection port 51, the connection port 51 is configured to be connected to an inflation pipeline, and the first guide rod 4 is provided with a first channel 43 with one end communicating with the connection port 51 and the other end communicating with an internal space of the sealing cover 2.

When the battery pack needs to be inflated, the tester holds the second holding portion 72 to rotate the second cam portion 71, the second cam portion 71 drives the sealing cover 2 to move up, and a bottom surface of the sealing cover 2 is separated from the fixed support 1 to form an assembly space. After engaging the valve body 162 of the explosion-proof valve 16 with the flange 121, the tester reverses the second cam portion 71, and under the action of the second elastic member 9, the sealing cover 2 tightly presses the valve body 162 of the explosion-proof valve 16.

At this time, with the provision of a first sealing ring 13 and a second sealing ring 15, a sealed cavity is formed between the sealing cover 2 and the valve body 162 of the explosion-proof valve 16.

Next, the tester holds the first holding portion 62 to rotate the first cam portion 61 until the first holding portion 62 is in a vertical state. The magnetic member 3 is in contact with and attracts the valve cover 161. The tester continues to rotate the first cam portion 61 until the first holding portion 62 and the second holding portion 72 are on the same side of the explosion-proof valve plugging device, and the valve cover 161 is pulled up to a predetermined height, and the valve cover 161 is separated from the valve body 162 to form an inflation opening for an air to enter the battery pack. At the same time, the probe rod 10 is lifted up by the valve cover 161 to a certain height, and the tester can visually see the height to which the valve cover 161 is lifted up by means of the scale on the probe rod 10.

After the valve cover 161 is opened and pulled to the predetermined height, the tester inflates into the inflation opening through the connection port 51 and the first channel 43 to test whether the battery pack leaks.

When the test is completed, the tester reverses the first cam portion 61 to the initial position, and under a restoring force of the spring of the explosion-proof valve 16 itself, the valve cover 161 is separated from the magnetic member 3 and resets and closes the inflation opening. After the second cam portion 71 is rotated again to lift the sealing cover 2, the tested battery pack can be removed.

The foregoing descriptions are merely preferred embodiments of the present application, and are not intended to limit the present application. For those skilled in the art, various modifications and variations may be made to the present application. Any modifications, equivalent substitutions, improvements, and the like made within the spirit and principle of the present application should fall within the scope of protection of the present application.

## Claims

1. An explosion-proof valve plugging device, comprising:
a sealing cover configured to cover an end of an explosion-proof valve that is provided with a valve cover;
a magnetic member arranged in the sealing cover, the magnetic member being configured to attract the valve cover; and
a first driving member that is in transmission connection with the magnetic member, and is configured to drive the magnetic member to move relative to the sealing cover, such that the magnetic member comes into contact with the valve cover and drives the valve cover to be opened.

2. The explosion-proof valve plugging device according to claim 1, further comprising:
a second driving member that is in transmission connection with the sealing cover, and is configured to drive the sealing cover to cover or move away from the end of the explosion-proof valve that is provided with the valve cover in a first direction.

3. The explosion-proof valve plugging device according to claim 1 or 2, further comprising:
a fixed support configured to be fixedly connected to a valve body of the explosion-proof valve, the sealing cover being movably arranged on the fixed support.

4. The explosion-proof valve plugging device according to any one of claims 1 to 3, further comprising:
a first guide rod slidably penetrating the sealing cover in the first direction, wherein one end of the first guide rod is connected to the magnetic member, the other end thereof is connected to the first driving member, and the first driving member drives the first guide rod to move in the first direction, so as to drive the magnetic member to move.

5. The explosion-proof valve plugging device according to claim 4, further comprising:
a first elastic member sleeved on the first guide rod, the first elastic member being elastically supported between the magnetic member and the sealing cover.

6. The explosion-proof valve plugging device according to claim 3, further comprising:
a second driving member that is in transmission connection with the sealing cover, and is configured to drive the sealing cover to cover or move away from the end of the explosion-proof valve that is provided with the valve cover in the first direction; and
a second guide rod slidably penetrating the fixed support in the first direction, wherein one end of the second guide rod is connected to the sealing cover, the other end thereof is connected to the second driving member, and the second driving member drives the second guide rod to move in the first direction, so as to drive the sealing cover to move.

7. The explosion-proof valve plugging device according to claim 6, further comprising:
a second elastic member sleeved on the second guide rod, the second elastic member being elastically supported between the sealing cover and the fixed support.

8. The explosion-proof valve plugging device according to claim 6 or 7, wherein the second driving member comprises:
a second cam portion rotatably connected to the second guide rod around a second axis and abutting against the fixed support, an extension direction of the second axis being perpendicular to the first direction; and
a second holding portion connected to the second cam portion.

9. The explosion-proof valve plugging device according to any one of claims 6 to 8, further comprising:
a first guide rod slidably penetrating the sealing cover in the first direction, wherein one end of the first guide rod is connected to the magnetic member, the other end thereof is connected to the first driving member, and the first driving member drives the first guide rod to move in the first direction, so as to drive the magnetic member to move; and
wherein the second guide rod is of a hollow structure, and the first guide rod is slidably arranged on the second guide rod in the first direction.

10. The explosion-proof valve plugging device according to claim 9, wherein the first driving member comprises:
a first cam portion that is rotatably connected, around a first axis, to an end of the first guide rod away from the magnetic member and abuts against the second guide rod, an extension direction of the first axis being perpendicular to the first direction; and
a first holding portion connected to the first cam portion.

11. The explosion-proof valve plugging device according to claim 9 or 10, wherein the second guide rod is provided with a connection port, the connection port is configured to be connected to an inflation pipeline, and the first guide rod is provided with a first channel with one end communicating with the connection port and the other end communicating with an internal space of the sealing cover.

12. The explosion-proof valve plugging device according to claim 11, wherein the magnetic member is provided with a second channel, and an end of the first channel away from the connection port communicates with the internal space of the sealing cover by means of the second channel.

13. The explosion-proof valve plugging device according to any one of claim 2 or claims 6 to 12, further comprising:
a fixed support configured to be fixedly connected to a valve body of the explosion-proof valve, the sealing cover being movably arranged on the fixed support,
wherein the first driving member and the second driving member are both arranged outside the fixed support.

14. The explosion-proof valve plugging device according to claim 3, wherein the fixed support comprises a top wall and a side wall; and
wherein the side wall is arranged around the top wall, an end of the side wall is connected to the top wall to form a cavity configured to accommodate the explosion-proof valve.

15. The explosion-proof valve plugging device according to claim 14, wherein the side wall is provided with an opening, and a flange for limiting of and engagement with the explosion-proof valve is provided at an end of the side wall away from the top wall in a protruding manner.

16. The explosion-proof valve plugging device according to claim 14 or 15, further comprising:
a probe rod slidably penetrating the sealing cover and the top wall in the first direction, wherein an end of the probe rod extends into the sealing cover, and the probe rod is configured to abut against the valve cover to measure a height to which the valve cover is opened.

17. The explosion-proof valve plugging device according to claim 16, wherein the probe rod comprises a limiting portion located between the top wall and the sealing cover for limiting separation of the probe rod from the top wall.

18. The explosion-proof valve plugging device according to any one of claims 1 to 17, further comprising:
a probe rod slidably penetrating the sealing cover, wherein an end of the probe rod extends into the sealing cover, and the probe rod is configured to abut against the valve cover to measure a height to which the valve cover is opened.

19. The explosion-proof valve plugging device according to claim 17 or 18, wherein a scale for indicating the height to which the valve cover is opened is provided on the probe rod.

20. The explosion-proof valve plugging device according to claim 17 or 18, wherein the sealing cover is provided with a second through hole for the probe rod to pass through, and a sealing member for forming an airtight connection between the probe rod and the sealing cover is arranged in the second through hole.
